# EUROPEAN PATENT APPLICATION

(11) **EP 3 608 608 A1**
(43) Date of publication of application: **12.02.2020**
(21) Application number: 18781524.6
(22) Date of filing: 28.03.2018
(51) Int. Cl.: F25B 30/06, F24F 11/70, F24F 11/86, F24F 11/871, F24T 10/10, F24T 50/00, F25B 13/00

(54) **AIR CONDITIONER**

(30) Priority: 06.04.2017 JP 2017075681
(71) Applicant: Panasonic Intellectual Property Management Co., Ltd., Osaka-shi, Osaka 540-6207 (JP)
(72) Inventor: KAWABE, Yoshikazu, Osaka 540-6207 (JP); HIROTA Masanobu, Osaka 540-6207 (JP)
(74) Representative: Eisenführ Speiser
(86) International application number: PCT/JP2018/012670
(87) International publication number: WO 2018/186250

(57) **Abstract**

Geothermal utilization heat exchanger (10) is disposed between outdoor heat exchanger (8) and indoor heat exchanger (5). First throttle unit (15) is disposed between outdoor heat exchanger (8) and geothermal utilization heat exchanger (10) and is composed of first expansion valve (13) and bypass valve (14) disposed to bypass both connection ports of first expansion valve (13). Second expansion valve (16) is disposed between geothermal utilization heat exchanger (10) and indoor heat exchanger (5). As such, a temperature of a refrigerant in geothermal utilization heat exchanger (10) can be adjusted through control of first throttle unit (15) and second expansion valve (16), an amount of underground heat to be utilized can be controlled properly with a heat load of outdoor unit (1) secured, and underground heat can be used effectively and stably even with underground heat capture part (3) of smaller scale.

## Description

### TECHNICAL FIELD

The present invention relates to a technique that aims at effective use of energy by utilizing a plurality of heat sources including, in addition to air heat, underground heat in an air conditioner that carries out air conditioning using a refrigeration cycle and a heat pump cycle.

### BACKGROUND ART

Emphasis has been placed on operating efficiencies of air conditioners in recent years from a global warming prevention perspective, and even regulation on air conditioner efficiency has been introduced as a matter of national policy. That has led to marketing of air conditioners that at least halve power consumption compared to 20 years ago.

Such improved operating efficiencies of the air conditioners have been achieved mainly by improved efficiency of a compressor, improved efficiency of a blower, and higher performance of a heat exchanger.

In addition to using an inverter, the compressor or the blower has used an expensive rare-earth magnet as a rotor of a motor and has also been enabled by an improved motor drive system to use a stator with a large number of windings that has once made high-speed operation difficult. Such efforts have reduced seasonal power consumption of the compressor or the blower.

The number of heat exchangers to be equipped tends to increase year by year for air conditioner performance improvement, and air conditioners have also increased in size. Developed techniques include not only simply increased number of heat exchangers to be equipped, but also elaborately contrived cut and raised fins and bent fin shapes for development of fins with excellent heat exchange performance, and optimized slimming of refrigerant piping and optimized pipe diameter variation for performance improvement.

Apart from those performance improvements of the elements, efforts including utilization of conventionally unused heat sources besides air heat have also been made to improve operating efficiencies of air conditioners and to reduce power consumption.

Utilization of natural heat sources such as solar heat, underground heat, and underutilized river water and even waste heat or the like from a boiler, a generator, and others at a plant is being actively attempted. There are even techniques that have been developed to utilize heat sources of an absorption refrigerator and a desiccant air conditioner for cooling, not to mention techniques that utilize solar heat and waste heat for heating.

Combining the heat source such as underground heat or underutilized river water with a refrigeration cycle or a heat pump cycle facilitates downsizing. However, in cases where underutilized river water is utilized as the heat source, as its name suggests, a river or an alternative such as a lake or a sea is required, so that installation conditions are limited.

Compared with such a heat source, underground heat involves loose installation conditions, and an increasing number of underground heat sources have been installed regardless of region. Installation undertakings intended for utilization of underground heat have increased significantly, particularly in recent years, because of subsidies from a national government and municipal governments, so that underground heat is being expected to be a potentially new heat source.

Underground areas located deeper than 30 m have once been used to provide underground heat mainly for large buildings and public buildings. However, techniques utilizing underground heat shallower than 30 m have also progressed, and detached houses and others have also been qualified to utilize the underground heat, adding to a growing number of constructions utilizing underground heat.

An underground temperature at 10 m or more below ground is stable all year around at around an average yearly temperature (15°C). Even a temperature at a depth ranging from 1 m to 2 m is maintained at about 8°C in winter and 25°C in summer and thus can be used for cooling in summer and heating in winter.

While the underground temperature varies gently around the average temperature, underground heat flow is mainly caused by heat transfer because there is no soil movement, so that excessive heat capture causes a temperature rise or a temperature decline that disenables effective use of underground heat and involves a long duration of temperature recovery. Although a considerably favorable condition can be maintained in an underground environment where there is a groundwater artery with movement of underground water, yet excessive capture of underground heat must be avoided, or else there remains the fact that air conditioning cannot be appropriately provided.

A geothermal heat pump device (refer to, for example, PTL 1) is a prior art that avoids excessive capture of underground heat by adjusting a heat medium circulation amount through control of a rotating speed of a pump that circulates a heat medium for capture of the underground heat. As illustrated in FIG. 2, the geothermal heat pump device described in PTL 1 is composed of three parts: heat pump unit 51, underground heat exchange part 52, and load heat exchange part 53.

Heat pump unit 51 includes compressor 54, load-side heat exchanger 55, expansion valve 56, and heat-source-side heat exchanger 57 that are connected in a loop to form heat pump circuit 58 in which a refrigerant is circulated. Heat pump unit 51 also includes underground circulation pump 59 that is a component of underground heat exchange part 52, and load-side circulation pump 60 that is a component of load heat exchange part 53. Heat pump unit 51 also includes underground supply temperature sensor 61 disposed at a heat medium outlet of underground circulation pump 59, underground return temperature sensor 62 disposed at a heat medium inlet of heat-source-side heat exchanger 57, and controller 63 that collectively controls associated actuators and the sensors.

Underground heat exchange part 52 includes underground heat exchangers 64, heat-source-side heat exchanger 57, and underground circulation pump 59 that are connected in a loop to form underground circulation circuit 65 in which the heat medium is circulated. Underground supply temperature sensor 61 is disposed at the heat medium outlet of underground circulation pump 59, and underground return temperature sensor 62 is disposed at the heat medium inlet of heat-source-side heat exchanger 57.

Load heat exchange part 53 includes load terminal 66, load-side circulation pump 60, load-side heat exchanger 55, and thermal valve 67 that are connected in a loop to form load-side circulation circuit 68 in which the heat medium is circulated.

Controller 63 drives compressor 54, underground circulation pump 59, and load-side circulation pump 60. Controller 63 detects a change in temperature detected by underground supply temperature sensor 61 or underground return temperature sensor 62 and adjusts the amount of circulation to be effected by underground circulation pump 59, thus effecting optimal underground heat capture that is neither too much nor too little for the purpose of improving overall efficiency of the geothermal heat pump.

### Citation List

### Patent Literature

PTL 1: Japanese Patent No. 5356900

### SUMMARY OF THE INVENTION

However, the conventional geothermal heat pump device is based on the assumption that underground heat exchangers 64 are capable of covering a whole load, that is to say, underground heat exchangers 64 capture a large amount of underground heat. Based on this, a flow rate of underground heat circulation pump 59 is adjusted for efficiency improvement of the geothermal heat pump device.

In order for underground heat exchangers 64 to ensure an enough amount of heat capture to cover the whole load, underground heat exchangers 64 need to be larger in number to be installed, thus increasing an initial equipment investment.

In cases where an underground heat exchanger is designed to capture a smaller amount of underground heat for the purpose of keeping down the initial equipment investment, if underground heat capture is not sufficient, a load cannot be covered, and damage is caused to amenity in cases of air conditioning. Forcing the underground heat exchanger to capture heat causes a temperature decline or a temperature rise to the underground heat exchanger and thus causes a decline in performance. A worst-case scenario is potential equipment failure resulting from frozen heat medium piping, the frozen heat exchanger, or an abnormal temperature rise in a compressor.

An air conditioner provided by the present invention is capable of preventing, for example, excessive capture of underground heat, lack of air conditioning capacity, or brine freezing without considerable investment in an underground heat exchanger and thus is capable of highly reliable underground heat utilization.

The air conditioner according to the present invention includes one of a refrigeration cycle and a heat pump cycle that includes a compressor that compresses and discharges a refrigerant, an outdoor heat exchanger that effects heat exchange between the refrigerant and outdoor air fed by an outdoor blower, and an indoor heat exchanger that effects heat exchange between the refrigerant and indoor air. The air conditioner also includes a pump that circulates a heat medium. The air conditioner also includes a heat medium circulation system including an underground heat exchanger that effects heat exchange between the heat medium and an underground place, and a geothermal utilization heat exchanger that effects heat exchange between the heat medium and the refrigerant. The geothermal utilization heat exchanger is disposed between the outdoor heat exchanger and the indoor heat exchanger. A first throttle unit is disposed between the outdoor heat exchanger and the geothermal utilization heat exchanger, while a second throttle unit is disposed between the geothermal utilization heat exchanger and the indoor heat exchanger. The first throttle unit and the second throttle unit are controlled to effect a refrigerant pressure change in the geothermal utilization heat exchanger.

The outdoor heat exchanger and the geothermal utilization heat exchanger are used in the heat source, so that the underground heat exchanger can be of smaller scale. A temperature difference of choice can be set between the refrigerant and the heat medium in the geothermal utilization heat exchanger, and an amount of underground heat to be utilized can be adjusted with total heat to release or capture in the heat source being kept at a constant level.

The air conditioner according to the present invention enables downsizing of the underground heat exchanger and thus keeps down installation costs. This air conditioner is also capable of effective use of underground heat on a smaller equipment investment.

Because the amount of underground heat to be utilized can be adjusted, thermal pollution of soil that causes a change in underground temperature and makes the utilization difficult, and device failures such as lack of air conditioning capacity and brine freezing can be prevented. Therefore, the device provided can be highly reliable.

### BRIEF DESCRIPTION OF DRAWINGS

FIG. 1 illustrates a configuration of an air conditioning system that uses a heat utilization device according to a first exemplary embodiment of the present invention.

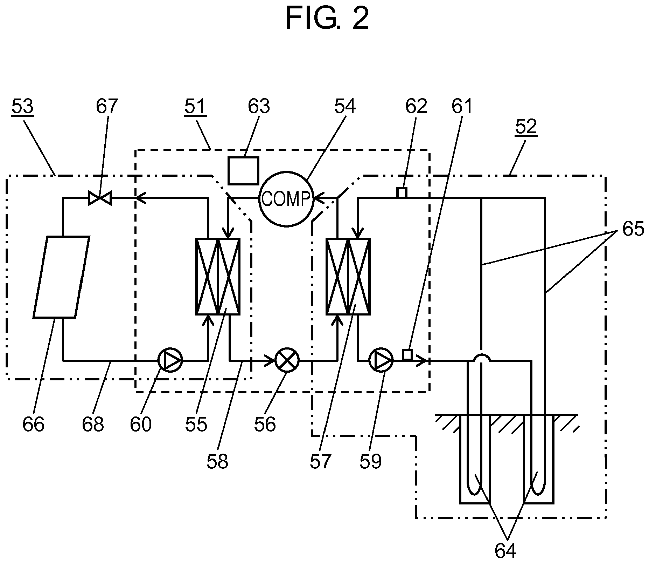

FIG. 2 illustrates a configuration of a conventional air conditioner that utilizes underground heat.

### DESCRIPTION OF EMBODIMENT

An exemplary embodiment of the present invention is hereinafter described with reference to the drawings. It is to be noted that this exemplary embodiment is not restrictive of the present invention.

### (First exemplary embodiment)

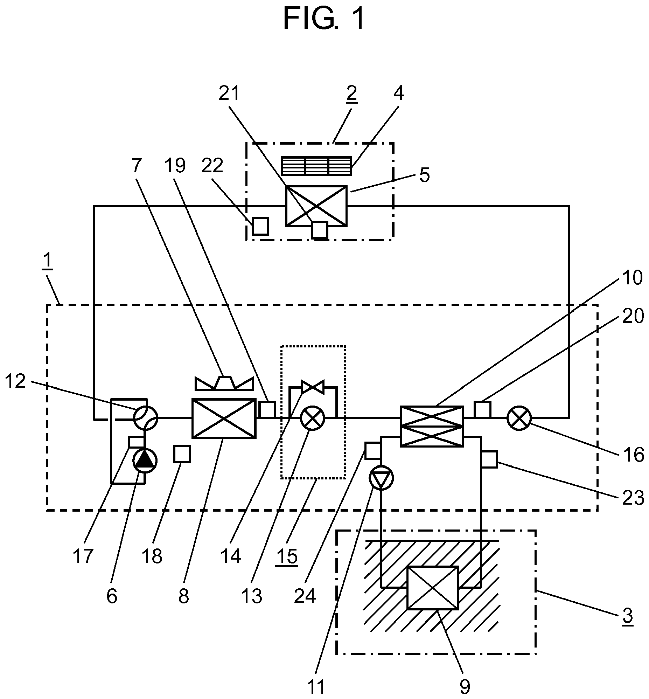

FIG. 1 illustrates a configuration of an air conditioner according to the first exemplary embodiment of the present invention.

As illustrated in FIG. 1, the air conditioner according to the present exemplary embodiment includes outdoor unit 1 and indoor unit 2 that are connected in a loop by piping for circulation of a refrigerant and carries out cooling or heating. Outdoor unit 1 and underground heat capture part 3 are connected in a loop by piping for circulation of a heat medium such as brine so that underground heat is utilized.

It is to be noted here that the refrigerant and the heat medium are not each limited to a particular kind and are, in the description, a commonly used refrigerant and the brine, respectively.

Disposed in indoor unit 2 are indoor blower 4 and indoor heat exchanger 5 that effects heat exchange with indoor air being fed by indoor blower 4 for cooling or heating.

Disposed in outdoor unit 1 are compressor 6 that compresses and discharges the refrigerant, outdoor heat exchanger 8 that effects heat exchange with outdoor air utilized as a heat source being fed by outdoor blower 7, and geothermal utilization heat exchanger 10 that forms a heat circulation system with underground heat exchanger 9 of underground heat capture part 3. Pump 11 is also disposed in outdoor unit 1 to circulate the brine, and geothermal utilization heat exchanger 10 effects heat exchange between the refrigerant and the brine.

Also disposed in outdoor unit 1 are four-way valve 12 that changes a direction of refrigerant circulation, first throttle unit 15, and second expansion valve 16 that is a second throttle unit. First throttle unit 15 is composed of first expansion valve 13 and bypass valve 14 disposed to bypass both connection ports of first expansion valve 13. It is to be noted, however, that four-way valve 12 is not required if the air conditioner is used exclusively for cooling or heating.

Four-way valve 12 is connected to a refrigerant suction port and a refrigerant discharge port of compressor 6, a gas side of outdoor heat exchanger 8 that has a higher gaseous refrigerant proportion, and a gas side of indoor heat exchanger 5. For cooling operation, the refrigerant at the gas side of indoor heat exchanger 5 is drawn into the suction port of compressor 6 and is then discharged from the discharge port toward the gas side of outdoor heat exchanger 8.

A liquid side of outdoor heat exchanger 8 has a higher liquid refrigerant proportion and is connected to one side of first throttle unit 15, namely, respective one sides of first expansion valve 13 and bypass valve 14. Another side of first throttle unit 15 is connected to a gas side of geothermal utilization heat exchanger 10. A liquid side of geothermal utilization heat exchanger 10 is connected to one side of second expansion valve 16, and another side of second expansion valve 16 is connected to a liquid side of indoor heat exchanger 5. In this circulation system thus formed, the refrigerant is repeatedly condensed and evaporated.

In the air conditioner of FIG. 1, discharge temperature sensor 17, outdoor temperature sensor 18, first piping temperature sensor 19, second piping temperature sensor 20, indoor heat exchange temperature sensor 21, indoor temperature sensor 22, underground return temperature sensor 23, and underground supply temperature sensor 24 are disposed. Information pieces from these sensors are used for control of the entire air conditioner.

FIG. 1 illustrates the cooling operation. The refrigerant returning from the gas side of indoor heat exchanger 5 via a low-pressure-side route of four-way valve 12 is compressed by compressor 6 to a high-temperature and high-pressure state and is discharged into a high-pressure-side route of four-way valve 12.

The high-temperature and high-pressure refrigerant is fed toward the gas side of outdoor heat exchanger 8 to be condensed and is discharged from the liquid side. And then, the refrigerant goes through at least one of first expansion valve 13 or bypass valve 14 of first throttle unit 15 to be depressurized as required and is fed toward the refrigerant gas side of geothermal utilization heat exchanger 10.

In geothermal utilization heat exchanger 10, the refrigerant undergoes heat exchange with the brine that is cooled in underground heat exchanger 9 of underground heat capture part 3 while being circulated by pump 11. After exiting from the refrigerant liquid side, the refrigerant heads toward second expansion valve 16.

After being depressurized by second expansion valve 16, the refrigerant exits outdoor unit 1 and is fed toward the liquid side of indoor heat exchanger 5 of indoor unit 2.

In indoor heat exchanger 5, the refrigerant is evaporated, undergoing heat exchange with indoor air to effect cooling. The refrigerant returns again to compressor 6 via the low-pressure-side route of four-way valve 12.

For heating operation, route switching takes place in four-way valve 12, and the refrigerant discharged from compressor 6 is fed toward the gas side of indoor heat exchanger 5 via four-way valve 12. The refrigerant is condensed in indoor heat exchanger 5, is depressurized by second expansion valve 16, and is fed toward the refrigerant liquid side of geothermal utilization heat exchanger 10.

In geothermal utilization heat exchanger 10, the refrigerant is evaporated by undergoing heat exchange with the brine that is heated in underground heat exchanger 9 of underground heat capture part 3 while being circulated by pump 11. After exiting from the refrigerant gas side, the refrigerant heads toward first throttle unit 15 composed of first expansion valve 13 and bypass valve 14.

After going through first throttle unit 15, the refrigerant finishes evaporating by undergoing heat exchange with outdoor air in outdoor heat exchanger 8 and returns to the suction port of compressor 6 via four-way valve 12.

For structure of underground heat capture part 3, a common method has been such that a polypropylene pipe is inserted into a hollow underground pile embedded to a depth ranging from 30 m to about 100 m and is filled with, for example, concrete, water, or brine. Piling has been carried out using a heavy machine intended for that purpose and has been costly.

Recently, various methods have been proposed toward achieving reduced installation costs and effective use of underground heat and include directly embedding a polypropylene pipe in relatively shallow soil, boring a well for circulation of well water, and securing a resin pipe so that the pipe is embedded together with a metallic pile when the pile is driven.

Although any method can be adopted for the structure of underground heat capture part 3 and can be effective, a method that is focused on keeping down installation costs and also uses a limited laying area, such as directly embedding a polypropylene pipe in relatively shallow soil, is used in the present exemplary embodiment.

Seeking everything required for air conditioning from an underground heat source in this condition brings about excessive heating or excessive cooling under the ground, causing a functional decline to this heat source.

In the present exemplary embodiment, geothermal utilization heat exchanger 10 is connected in series to the liquid side of outdoor heat exchanger 8 to be used in combination with outdoor heat exchanger 8, and a temperature of the refrigerant in geothermal utilization heat exchanger 10 is controlled by means of first throttle unit 15 and second expansion valve 16 for adjustment of an amount of heat exchange with an underground place.

As such, the necessary heat sources can be secured, and an amount of underground heat to be utilized can also be controlled appropriately. Consequently, the device that is highly reliable can be installed on a smaller equipment investment, and underground heat can be used effectively.

In the present exemplary embodiment, a total of a heat exchange amount of outdoor heat exchanger 8 and a heat exchange amount of geothermal utilization heat exchanger 10, that is to say, a total amount of outdoor heat exchange is calculated based on an air conditioning load. Based on the calculated total amount of outdoor heat exchange, an outdoor temperature, a temperature of the brine returning to geothermal utilization heat exchanger 10, and others, the amount of underground heat to be utilized is determined. Based on the determined amount of underground heat to be utilized, the heat exchange amount of geothermal utilization heat exchanger 10 is adjusted by means of first throttle unit 15 and second expansion valve 16.

If an output of outdoor blower 7 is adjusted properly based on the heat exchange amount of outdoor heat exchanger 8 that has been calculated in this series of controls and the temperature output from outdoor temperature sensor 18, the output of outdoor blower 7 can be prevented from being increased more than necessary, and power consumption can be reduced.

In the present exemplary embodiment's above process involving control of first throttle unit 15 and second expansion valve 16, the heat exchange amount of outdoor heat exchanger 8 and the heat exchange amount of geothermal utilization heat exchanger 10 are calculated. Based on these heat exchange amounts and a difference between the temperature output from outdoor temperature sensor 18 and the temperature output from underground return temperature sensor 23, an output of pump 11 is adjusted.

In other words, if the cooling operation is the case, with respect to any amount of heat exchange with outdoor air and the amount of underground heat to be utilized, the temperature output from underground return temperature sensor 23 is lower than a refrigerant condensation temperature that is estimated from the temperature output from outdoor temperature sensor 18 and the heat exchange amount of outdoor heat exchanger 8. In cases where there is a large difference between the refrigerant condensation temperature and the temperature output from underground return temperature sensor 23, the output of pump 11 is decreased for energy saving because heat exchange can be effected easily even with a lower brine flow rate. Conversely, in cases where there is a small difference between the refrigerant condensation temperature and the temperature output from underground return temperature sensor 23, the output of pump 11 is increased to secure the heat exchange amount, and an input to compressor 6 is controlled to decrease.

If the heating operation is the case, with respect to any amount of heat exchange with outdoor air and the amount of underground heat to be utilized, the temperature output from underground return temperature sensor 23 is higher than a refrigerant evaporation temperature that is estimated from the temperature output from outdoor temperature sensor 18 and the heat exchange amount of outdoor heat exchanger 8. In cases where there is a large difference between the refrigerant evaporation temperature and the temperature output from underground return temperature sensor 23, the output of pump 11 is decreased for energy saving because heat exchange can be effected easily even with a lower brine flow rate. Conversely, in cases where there is a small difference between the refrigerant evaporation temperature and the temperature output from underground return temperature sensor 23, the output of pump 11 is increased to secure the heat exchange amount, and the input to compressor 6 is controlled to decrease.

In this way, the output of pump 11 is controlled appropriately, and the air conditioner provided can thus reduce power consumption.

In the present exemplary embodiment, first throttle unit 15 is composed of first expansion valve 13 and bypass valve 14. As such, in cases where a refrigerant saturation temperature difference is required between outdoor heat exchanger 8 and geothermal utilization heat exchanger 10, closing bypass valve 14 and adjusting opening of first expansion valve 13 can easily effect such a desired saturation temperature difference.

In cases where an increasing heat exchange amount demands an increase particularly in the heat exchange amount of geothermal utilization heat exchanger 10, bypass valve 14 is fully opened, so that pressure loss can be minimized at first throttle unit 15.

While underground heat is effectively used with its utilization amount controlled, this enables increased use of underground heat and operation that is more responsive to an operation condition of the air conditioner.

As a result, the air conditioner provided can reduce the power consumption even further.

If not only bypass valve 14 but also first expansion valve 13 is fully opened, the air conditioner provided can even more reduce the power consumption.

In the present exemplary embodiment, the brine circulation system formed is such that the refrigerant and the brine flow to oppose each other in geothermal utilization heat exchanger 10 during the cooling operation so that the temperature of the refrigerant to condense approaches the temperature of the brine returning from the underground place. With the refrigerant and the brine flowing in this way, enthalpy of the refrigerant reduces, and operation performance can improve the most.

In this configuration, the refrigerant and the brine flow in the same direction during the heating operation, and this cannot necessarily be said to be appropriate in consideration of only geothermal utilization heat exchanger 10. However, since outdoor heat exchanger 8 is found downstream and is used in combination with geothermal utilization heat exchanger 10, the refrigerant can finish its evaporation in outdoor heat exchanger 8, so that no performance decline is caused.

This configuration does not require geothermal utilization heat exchanger 10 and outdoor heat exchanger 8 to each undergo a change of connection for both cooling and heating and thus does not require any valve for such connection changes, so that the air conditioner can be made at lower costs.

As described above, a first disclosure includes one of a refrigeration cycle and a heat pump cycle that includes the compressor that compresses and discharges the refrigerant, the outdoor heat exchanger that effects heat exchange between the refrigerant and outdoor air fed by the outdoor blower, and the indoor heat exchanger that effects heat exchange between the refrigerant and indoor air. The first disclosure also includes the pump that circulates the heat medium. The first disclosure also includes the heat medium circulation system including the underground heat exchanger that effects heat exchange between the heat medium and an underground place, and the geothermal utilization heat exchanger that effects heat exchange between the heat medium and the refrigerant. The geothermal utilization heat exchanger is disposed between the outdoor heat exchanger and the indoor heat exchanger. The first throttle unit is disposed between the outdoor heat exchanger and the geothermal utilization heat exchanger. The second throttle unit, the underground return temperature sensor that detects the temperature of the heat medium returning from the underground place, and the outdoor temperature sensor that detects the temperature of the outdoor air are disposed between the geothermal utilization heat exchanger and the indoor heat exchanger. The first throttle unit and the second throttle unit are controlled to effect a refrigerant pressure change in the geothermal utilization heat exchanger.

The outdoor heat exchanger and the geothermal utilization heat exchanger are used in the heat source, so that the underground heat exchanger can be of smaller scale. A temperature difference of choice can be set between the refrigerant and the heat medium in the geothermal utilization heat exchanger, and the amount of underground heat to be utilized can be adjusted with the total heat to release or capture in the heat source being kept at a constant level.

The underground heat exchanger can be downsized, so that installation costs can be kept down, and effective use of underground heat can be achieved on a smaller equipment investment.

Because the amount of underground heat to be utilized can be adjusted, thermal pollution of soil that causes a change in underground temperature and makes the utilization difficult, and device failures such as lack of air conditioning capacity and brine freezing can be prevented. Therefore, the device provided can be highly reliable.

According to a second disclosure that is based on the first disclosure, a rotating speed of the outdoor blower may be adjusted based on the heat exchange amount of the outdoor heat exchanger.

This enables the outdoor blower to reduce unnecessary feeding of outdoor air.

Accordingly, power consumption of the outdoor blower can be reduced.

According to a third disclosure that is based on the first disclosure, an amount of circulation to be effected by the pump may be adjusted based on the heat exchange amount of the geothermal utilization heat exchanger, the detection result of the underground return temperature sensor, and the detection result of the outdoor temperature sensor.

This enables the pump to reduce unnecessary feeding of the heat medium.

Accordingly, power consumption of the pump can be reduced.

According to a fourth disclosure that is based on the second disclosure, the amount of circulation to be effected by the pump may be adjusted based on the heat exchange amount of the geothermal utilization heat exchanger, the detection result of the underground return temperature sensor, and the detection result of the outdoor temperature sensor.

This enables the pump to reduce unnecessary feeding of the heat medium.

Accordingly, the power consumption of the pump can be reduced.

According to a fifth disclosure that is based on any one of the first through fourth disclosures, the first throttle unit may include the expansion valve and a bypass circuit having the bypass valve bypassing the expansion valve.

This can cause an accurate refrigerant pressure change in the geothermal utilization heat exchanger based on the air conditioning load or the amount of underground heat to be utilized.

Accordingly, the amount of underground heat to be utilized can be adjusted accurately for enhanced efficiency of the device.

According to a sixth disclosure that is based on the fifth disclosure, when underground heat is utilized maximally in the geothermal utilization heat exchanger, the expansion valve may be fully opened with the bypass valve opened.

This enables the first throttle unit to have a minimum resistance to the flow of the refrigerant, and thus can cause a largest temperature difference between the refrigerant and the heat medium at the inlets of the geothermal utilization heat exchanger.

Accordingly, the device provided can increase the amount of underground heat to utilize and thus can have better performance.

According to a seventh disclosure that is based on any one of the first through fourth disclosures, the heat medium circulation system may be formed to cause, in the geothermal utilization heat exchanger, the heat medium being circulated by the pump to flow opposite in direction to the flow of the refrigerant heading from the outdoor heat exchanger toward the indoor heat exchanger through the geothermal utilization heat exchanger.

In this way, even without a change of the flowing direction of the heat medium, favorable heat exchange performance can be obtained during the cooling operation, that is to say, when the refrigerant is condensed in the geothermal utilization heat exchanger, and a heat exchange performance decline can also be prevented during the heating operation, that is to say, when the refrigerant is evaporated in the geothermal utilization heat exchanger.

Accordingly, the device provided can use a reduced number of driving components and thus can have lower component costs.

According to an eighth disclosure that is based on the fifth disclosure, the heat medium circulation system may be formed to cause, in the geothermal utilization heat exchanger, the heat medium being circulated by the pump to flow opposite in direction to the flow of the refrigerant heading from the outdoor heat exchanger toward the indoor heat exchanger through the geothermal utilization heat exchanger.

In this way, even without the change of the flowing direction of the heat medium, favorable heat exchange performance can be obtained during the cooling operation, that is to say, when the refrigerant is condensed in the geothermal utilization heat exchanger, and a heat exchange performance decline can be also be prevented during the heating operation, that is to say, when the refrigerant is evaporated in the geothermal utilization heat exchanger.

Accordingly, the device provided can use a reduced number of driving components and thus can have lower component costs.

According to a ninth disclosure that is based on the sixth disclosure, the heat medium circulation system may be formed to cause, in the geothermal utilization heat exchanger, the heat medium being circulated by the pump to flow opposite in direction to the flow of the refrigerant heading from the outdoor heat exchanger toward the indoor heat exchanger through the geothermal utilization heat exchanger.

In this way, even without the change of the flowing direction of the heat medium, favorable heat exchange performance can be obtained during the cooling operation, that is to say, when the refrigerant is condensed in the geothermal utilization heat exchanger, and the heat exchange performance decline can also be prevented during the heating operation, that is to say, when the refrigerant is evaporated in the geothermal utilization heat exchanger.

Accordingly, the device provided can use the reduced number of driving components and thus can have the lower component costs.

### INDUSTRIAL APPLICABILITY

As described above, an air conditioner according to the present invention is provided as an efficient device that appropriately and effectively uses a heat source different from outdoor air. A technique used in the air conditioner is not limited to the air conditioner and can be applied extensively in those including hot water supply.

### REFERENCE MARKS IN THE DRAWINGS

- 1: outdoor unit
- 2: indoor unit
- 3: underground heat capture part
- 4: indoor blower
- 5: indoor heat exchanger
- 6: compressor
- 7: outdoor blower
- 8: outdoor heat exchanger
- 9: underground heat exchanger
- 10: geothermal utilization heat exchanger
- 11: pump
- 12: four-way valve
- 13: first expansion valve
- 14: bypass valve
- 15: first throttle unit
- 16: second expansion valve (second throttle unit)
- 17: discharge temperature sensor
- 18: outdoor temperature sensor
- 19: first piping temperature sensor
- 20: second piping temperature sensor
- 21: indoor heat exchange temperature sensor
- 22: indoor temperature sensor
- 23: underground return temperature sensor
- 24: underground supply temperature sensor

## Claims

1. An air conditioner comprising:
one of a refrigeration cycle and a heat pump cycle that includes a compressor that compresses and discharges a refrigerant, an outdoor heat exchanger that effects heat exchange between the refrigerant and outdoor air fed by an outdoor blower, and an indoor heat exchanger that effects heat exchange between the refrigerant and indoor air;
a heat medium circulation system including a pump that circulates a heat medium, an underground heat exchanger that effects heat exchange between the heat medium and an underground place, and a geothermal utilization heat exchanger that effects heat exchange between the heat medium and the refrigerant,
the geothermal utilization heat exchanger being disposed between the outdoor heat exchanger and the indoor heat exchanger,
a first throttle unit disposed between the outdoor heat exchanger and the geothermal utilization heat exchanger;
a second throttle unit;
an underground return temperature sensor that detects a temperature of the heat medium returning from the underground place; and
an outdoor temperature sensor that detects a temperature of the outdoor air,
the second throttle unit, the underground return temperature sensor, and the outdoor temperature sensor disposed between the geothermal utilization heat exchanger and the indoor heat exchanger,
wherein the first throttle unit and the second throttle unit are controlled to effect a refrigerant pressure change in the geothermal utilization heat exchanger.

2. The air conditioner according to claim 1, wherein a rotating speed of the outdoor blower is adjusted based on a heat exchange amount of the outdoor heat exchanger.

3. The air conditioner according to claim 1, wherein an amount of circulation to be effected by the pump is adjusted based on a heat exchange amount of the geothermal utilization heat exchanger, a detection result of the underground return temperature sensor, and a detection result of the outdoor temperature sensor.

4. The air conditioner according to claim 2, wherein an amount of circulation to be effected by the pump is adjusted based on a heat exchange amount of the geothermal utilization heat exchanger, a detection result of the underground return temperature sensor, and a detection result of the outdoor temperature sensor.

5. The air conditioner according to any one of claims 1 to 4, wherein the first throttle unit includes an expansion valve and a bypass circuit having a bypass valve bypassing the expansion valve.

6. The air conditioner according to claim 5, wherein when underground heat is utilized maximally in the geothermal utilization heat exchanger, the expansion valve is fully opened with the bypass valve opened.

7. The air conditioner according to any one of claims 1 to 4, wherein the heat medium circulation system causes, in the geothermal utilization heat exchanger, the heat medium being circulated by the pump to flow opposite in direction to a flow of the refrigerant heading from the outdoor heat exchanger toward the indoor heat exchanger through the geothermal utilization heat exchanger.

8. The air conditioner according to claim 5, wherein the heat medium circulation system causes, in the geothermal utilization heat exchanger, the heat medium being circulated by the pump to flow opposite in direction to a flow of the refrigerant heading from the outdoor heat exchanger toward the indoor heat exchanger through the geothermal utilization heat exchanger.

9. The air conditioner according to claim 6, wherein the heat medium circulation system causes, in the geothermal utilization heat exchanger, the heat medium being circulated by the pump to flow opposite in direction to a flow of the refrigerant heading from the outdoor heat exchanger toward the indoor heat exchanger through the geothermal utilization heat exchanger.
